# EUROPEAN PATENT APPLICATION

(11) **EP 4 509 285 A1**
(43) Date of publication of application: **19.02.2025**
(21) Application number: 23192246.9
(22) Date of filing: 18.08.2023
(51) Int. Cl.: B27N 3/00, B27N 5/00, B27N 1/00, B27N 3/04, C08L 97/02

(54) **MOULDING COMPOUND COMPRISING CELLULOSIC FIBERS AND PROCESS FOR MANUFACTURING THE MOULDING COMPOUND**

(71) Applicant: PaperShell AB, 543 50 Tibro (SE)
(72) Inventor: Breitholz, Anders, 426 71 Västra Frölunda (SE); Holmkvist, Anders, 468 33 Vargön (SE)
(74) Representative: AWA Sweden AB

(57) **Abstract**

The present invention relates to a moulding compound, comprising:
60 to 90 wt% of cellulosic fibres having a length of maximum 10mm,
0 to 10% of an acidic curing catalyst and
10 to 40 wt% of a binding agent selected form the group consisting of: cellulose, hemicellulose, furan and derivatives thereof, lignin and combinations thereof.

## Description

### TECHNICAL FIELD

The present invention relates to a moulding compound comprising cellulosic fibres and a process of manufacturing said moulding compound.

### BACKGROUND

In view of the growing awareness of the negative environmental impacts of global warming and pollution of sea and soil, it is a necessity to replace pure fossil-based plastics, mineral filled plastics and fibre reinforced plastics (FRP), glass fibre reinforced plastics (GFRP) and carbon reinforced plastics (CFRP), with more environmentally friendly alternatives. FRP composites such as GFRP and or CFRP composites, exhibit a high or very high strength-to-weight ratio, and is extremely rigid due to the pronounced length and strength of the synthetic non-degradable fibres. These FRP composites are often used in various applications where e.g., flexural strength, impact resistance and/or weather resistance is of importance, like in vehicles, in protective sport appliances, buildings, electric housing and the like. However, the environmental impact of these materials is high in both manufacturing of raw materials like glass or carbon fibre, production of an intermediate of the same, and disposal and/or recycling. Attempts have been made to replace fossil-based polymers in GFRP and CFRP materials with more environmentally friendly alternatives, e.g., bio based or bio attributed polymers. Further, attempts have been made to replace the glass or carbon fibre with natural fibres such as flax, hemp, sisal etc. However, the major challenge for both bio based and/or bio attributed, and renewable and/or natural fibre alternatives for GFRP and CFRP composites is the high price point, lack of sufficient volumes and consistency of quality in supply that can compete with the fossil-based polymers and synthetic fibres.

Natural fibre composites (NFC) are divided into non-wood fibre-based composites and wood fibres and wood particles-based composites. Wood fibres are often shorter in length than other natural fibres like jute or flax. Due to the greater length of the non-wood fibres (natural fibres) e.g., the potential in flexural strength driven applications is greater than with the wood fibres and/or wood particles. Theses fibres often have high (>50%) cellulose with high tendency to be hydrophilic and generating problems such as natural rotting process, dimensions instability, delaminating and other problems due to climate cycling (moisture and temperature). To address these problems the NFC industry needs to saturate the composites with binders that often are fossil based such as thermosets and thermoplastics where >20% bio content is considered high in such systems. Meaning that these natural fibres are combined with fossil-based systems which is bad for the environment and very problematic to recycle or separate.

A large and stable renewable resource of cellulosic fibres is from the forest industries coming from different wood species, such as conifer or eucalyptus, in the pulp and paper production. Recently, a number of NFC materials have been produced combining cellulosic fibres from forests and polymers to decrease the environmental impacts and yet create load-bearing articles. Such materials are usually manufactured by mixing and compounding pure wood fibres or fibres form pulp and paper production into granulates for injection moulding, wherein the final article is thus not based on layered sheets.

A well-known solution of creating load-bearing 3D single curved, or developable, solutions based on cellulosic fibres is wood veneer that comprises layers, wherein the long wood fibres in each layer are often placed perpendicularly to the wood fibres in the adjacent layers, and wherein the layers are heat-pressed in a single curved shape, such as a seat for a chair. For more complex 3D surfaces, such as double curved, or non-developable, surfaces, special and expensive 3D veneer or plastics is the only option, since the traditional veneer will tear and break at attempts to create a double-curved surface.

Another well-known example of using short cellulose fibres found in paper is to create flat load-bearing applications using high pressure laminate or HPL, consisting of several different layers of paper and surface materials, as well as polymer or phenolic binders. Although some special and exotic grades of HPL can be post-formed around single curved edges by application of heat and restraint and using a thermoplastic binder that can be post formed, HPL has never been used for manufacturing articles having complex 3D non-developable surface including combinations of single curve, double curve and/or revolutions and translations, e.g. a load bearing spheric shape for a helmet, cylindrical revolved surface for a vase or the complex surfaces for a hull of a boat.

Sheet moulding Compound (SMC) is a compression moulding compound often used for larger parts where higher mechanical strength is needed. SMC is a fibre reinforced thermoset material. Glass reinforcement is between 10% and 60%, and glass length is slightly longer than Bulk moulding Compound (BMC) - between 1/2-inch (12.5 mm) and 1-inch (25mm).

Thermoset Sheet moulding Compound (SMC) is a mixture of polymer resin, inert fillers, fibre reinforcement, catalysts, pigments and stabilizers, release agents, and thickeners and possesses strong dielectric properties. Manufacture of sheet moulding compounds is a continuous in-line process. The material is sheathed both top and bottom with a polyethylene or nylon plastic film to prevent auto-adhesion. The paste is spread uniformly onto the bottom film. Chopped glass fibres are randomly deposited onto the paste. The top film is introduced, and the sandwich is rolled into a pre-determined thickness. The sheet is allowed to mature for 48 hours.

SMC can be moulded into complex shapes. Superior mechanical properties and surface appearance, plus excellent electrical insulation make this thermoset material ideal for automotive Class A body panels, high-strength electrical parts, business equipment cabinets, personal watercraft, and various structural components.

Bulk moulding Compound (BMC) is a thermoset plastic resin blend of various inert fillers, fibre reinforcement, catalysts, stabilizers, and pigments that form a viscous, 'puttylike' injection moulding compound. Bulk moulding Compound (BMC) is highly filled and reinforced with short fibres. Glass reinforcement represents between 10% and 30%, with glass length typically between 1/32-inch (0.8 mm) and 1/2-inch (12.5 mm). Depending on the end-use application, bulk moulding compounds are formulated to achieve close dimensional control, flame and track resistance, electrical insulation, corrosion and stain resistance, superior mechanical properties, low shrink, and colour stability. Its excellent flow characteristics, dielectric properties, and flame resistance make this thermoset material well-suited to a wide variety of applications requiring precision in detail and dimensions as well as high performance. The material is available in a broad selection of colours and can tolerate powder-coat or water-based paint.

Another option to create complex 3D load-bearing articles comprising layers of fibres from a renewable natural source and having a high tensile and flexural strength is using long cellulosic fibres such as hemp, flax, ramie, and sisal. Such fibres may be weaved info flat yet 2D flexible mats/fabrics impregnated with a binder. These materials are frequently used for providing flat and 3D structures having advantageous mechanical properties. Here, the length of the fibres is of a paramount importance, wherein each fibre is placed on the complex 3D surface. This process is expensive, and the source of harvested fibres competes with food and textile industry. Another challenge is that the long natural fibres are hydrophilic, thus absorbing moisture and making them unsuitable for outdoor use and wet spaces. Also, the need of polymer binders still makes these natural fibre composites, just like any composites comprising polymers, difficult or impossible to recycle, thus disrupting plastics recycling loops.

Finally, it is known to combine cellulosic fibres with polymeric materials, such as thermoplastics, in order to manufacture a granulate for injection moulding, extrusion and blow and press moulding. Although the thermoplastic material may be bio-based and biodegradable, such a material is rather expensive, and the bio-based solutions have inferior properties to fossil based resin systems. And there is an ongoing debate whether NCFs and bio based polymers, which in turn are based on crops grown in fields, compete with agriculture land needed for food production. Also in several cases the need for fertilisers and the low yield has shown that so called bio plastics have negative overall environmental impacts. On top of this you have the uncertainties of weather affecting harvests from year to year creating fluctuations in price.

WO2023/280918 discloses a moulding compound comprising 60 to 90 wt% of cellulosic fibres having a length of maximum 10mm, 0 to 10% of an acidic curing catalyst and 10 to 40 wt% of a binding agent selected form the group consisting of cellulose, hemicellulose, furan and derivatives thereof, lignin and combinations thereof. The moulding compound of WO2023/280918 may be used for obtaining articles having complex 3D structures. As further disclosed in WO2023/280918, such articles oftentimes comprise uniform thickness.

When creating articles having complex 3D structures, it may be desirable to have portions having variable thickness. For instance, additional thickness may be needed in portion of the 3D article being subject to stress loads or impacts, or in portions intended for arranging screws, fittings and other fastening means for mechanically joining adjacent materials and/or components. The solutions of the prior art are primarily directed to using different additives, and/or providing pelletized material that may be extruded. Such solutions suffer from the disadvantage of complexity and increased costs.

Considering the challenges currently existing in the technical field, it is desired to provide a moulding compound comprising natural and renewable components having low environmental impact and improved formability, while obtaining mechanical properties being comparable with fibres composites such as GFRP, fossil based polymers and even metals such as aluminium.

### SUMMARY

In view of the above, the present invention aims to solve at least some of the problems of the prior art. To this end, the present invention provides a moulding compound, comprising 60 to 90 wt% of cellulosic fibres having a length of maximum 10mm, 0 to 10% of an acidic curing catalyst and 10 to 40 wt% of a binding agent selected form the group consisting of: cellulose, hemicellulose, furan and derivatives thereof, lignin and combinations thereof.

The binding agent may be polyfurfuryl alcohol (PFA). In such an embodiment, the curing catalyst is an acidic curing catalyst present in an amount from 0.1 to 10 wt%, preferably from 0.1 to 5 wt%. The acidic curing catalyst may be an organic or an inorganic acid, such as sulfuric acid, hydrochloric acid, or p-toluenesulfonic acid.

Further, the moulding compound according to the present invention may comprise a plasticizer.

The plasticizer according to the present invention may be a cashew nutshell liquid (CNSL). When a plasticizer is added, the resulting moulding compound exhibits improved homogeneity, softness and pliability.

When it comes to plasticizers for polyfurfuryl alcohol (PFA) resins, there are various options available depending on the desired properties and applications of the final product. Examples of commonly used plasticizers are dibutyl phthalate (DBP), diethyl phthalate (DEP), triacetin, castor oil, sorbitol, polyethylene glycol (PEG), glycerol.

The amount of plasticizer can vary depending on the specific requirements of the application. The concentration of plasticizer is typically expressed as a percentage of the resin weight. The exact amount of plasticizer needed will depend on factors such as the desired flexibility, hardness, and other performance characteristics of the final product. It is important to note that excessive amounts of plasticizer can potentially impact the overall mechanical and thermal properties of the resin, so careful formulation and testing are necessary to find the optimal balance.

For organic plasticizers, including those mentioned earlier, typical amounts in a composite can range from around 5% to 30% by weight. However, it is important to note that the optimal concentration may vary based on the specific plasticizer, the desired flexibility, the mechanical properties required, and other factors related to the composite's intended application.

Keep in mind that the plasticizer content should strike a balance between enhancing the flexibility and processability of the composite while maintaining suitable mechanical strength and stability.

The cellulosic fibres may comprise from 0-100% virgin cellulosic fibres and 0-100% recycled cellulosic fibres. In other words, the cellulosic fibres may be only virgin cellulosic fibres, only recycled cellulosic fibres or a mixture thereof.

The moulding compound may have an amount of biobased carbon of at least 80%.

The inventors have surprisingly found that the cellulosic fibre substrate as described above exhibits advantageous properties in terms of softness and pliability. It has been shown that the moulding compound may be used when it is desired to create a complex 3D article having varying thickness.

As mentioned above, the moulding compound comprises cellulosic fibres having a length of maximum 10 mm. Cellulosic fibres are made with ethers or esters of cellulose, which can be obtained from the bark, wood or leaves of plants, or from other plant-based material. Cellulosic fibres may be derived from the conversion of wood into wood pulp. The length of each cellulosic fibre in the composite material may be same as or different from the length of the other cellulosic fibres. Indeed, it is conceivable that some of the cellulosic fibres may have a length being greater than 10 mm, but the amount of these fibres should be considered negligible. By the term "negligible" is understood as an amount below 0.01 wt%. Cellulosic fibres may be provided in any suitable form, such as sheets, rolls, batting or the like.

The cellulosic fibres that may be used for manufacturing the moulding compound according to the present invention can be recycled cellulosic fibres, which offers the advantage of decreasing the cost of the moulding compound and contributing to a circular economy. On the other hand, the cellulosic fibres may be virgin cellulosic fibres, which provides an increased tensile and/or flexural strength of the circuit board compared to when recycled cellulosic fibres are used. Further, it is conceivable that the cellulosic fibres is a mixture of recycled and virgin cellulosic fibres in a range of 0-100% virgin cellulosic fibres and 0-100% recycled cellulosic fibres respectively. The cellulosic fibres may comprise paper, e.g. softwood kraft paper, hardwood kraft paper, sulphite fibres, organosolv fibres, non-woven or combinations thereof. It is conceivable that the cellulosic fibres comprise from 50 to 90 wt% of the kraft paper. The paper may be provided in the form of sheets and/or in the form of continuous sheets, e.g. paper rolls.

The moulding compound of the present invention may comprise from 60 to 90 wt% of the cellulosic fibres and 10 to 40 wt% of the binding agent. The moulding compound may have an amount of biobased carbon of at least 80%, preferably at least 90%, more preferably at least 95%. The biobased carbon is derived in whole or in part from biomass resources. Biomass resources are organic materials that are available on a renewable or recurring basis such as crop residues, wood residues, grasses, and aquatic plants. On the contrary, non-biobased carbon is made entirely from petrochemical resources. The amount of biobased carbon referred to above is a measure of the amount of biobased carbon in the product as compared to the sum of biobased and petroleum-based carbon in the product. The term biobased carbon describes carbon of non-fossil origin and relates to the cellulosic fibres and/or binding agent and/or additives.

The moulding compound may comprise additives such as a UV-agent, a conducting compound, a pigment, a hydrophobic substance, a softener, a hardener, a curing agent, or the like. The catalyst may be an acidic catalyst, e.g. an inorganic or organic acid. The catalyst may be added in a range of 0-10 wt% and may have a pH value <5 and/ or an acid number < 5mg KOH/g. The additive may be added in order to increase chemical, fire and wear resistance, and/or to increase curing speed, thus maximizing production.

One of the reasons for the high tensile and/or flexural strength of the moulding compound of the present invention is believed to be a good adhesion between the fibres and the binding agent. The binding agent contributes to internal mechanical cross-linking of the fibres to each other, such that the fibres are caught and locked in each other, thus contributing to the tensile and/or flexural strength of the moulding compound.

Another reason for the high tensile and/or flexural strength of the moulding compound is the possibility to determine fibre orientation in the 3D article during manufacturing.

The cellulosic fibres may be randomly oriented or may be oriented such that the longitudinal extensions of the fibres are substantially parallel or substantially crisscrossed. To this end, the fibres may be positioned such that the longitudinal extension of the major portion of the fibres (the grain direction) is aligned in the same direction. It has been shown that the tensile and/or flexural strength in the direction being parallel to the grain direction is significantly higher compared to the tensile and/or flexural strength in the direction being perpendicular to the grain direction, e.g. as much as two times higher. Therefore, it is possible to design moulding compounds such that tensile and/or flexural and/or flexural strength is adapted to the intended use.

It is known that moulding compound comprising long cellulosic fibres, such as hemp, flax, ramie, and sisal can exhibit rather high tensile and/or flexural strength. It has been surprisingly found that the 3D article of the present invention comprising a moulding compound comprising short cellulosic fibres, i.e. cellulosic fibres having length of maximum 10 mm, preferably maximum 4 mm, exhibit the tensile and/or flexural strength being comparable to natural fibre moulding compound having long cellulosic fibres. At the same time, due to the fact that the short cellulosic fibres become impregnated by the binding agent, the article comprising short cellulosic fibres becomes water-repellent to a larger extent compared to an article comprising long cellulosic fibres. The term "water-repellent" means hydrophobic and/or having a density that prevents water from penetrating the material. Since the short cellulosic fibres are easily movable within the moulding compound during manufacturing, the layers are enabled to merge, as the fibres may "float" and fill cracks and tearing that may appear during manufacturing of moulding compounds having complex surface structures. According to the present invention it is possible to manufacture moulding compounds having small radii of curvature, which is a known problem in the area of creating complex 3D structures.

The moulding compound according to the present invention exhibits high moisture resistance due to the nature of the binding agent possibly in combination with the production process. Further, it has been found that the moulding compound according to the present invention when using PFA is self-extinguishable.

Further, it has been found that the moulding compound according to the present invention is inflammable and self-extinguishable. According to a glow wire test performed, in accordance with IEC 60695-2-12:2021, the moulding compound according to the invention when cured with PFA as a binding agent, passed the temperature test at 650° and 850° C. The moulding compound according to the present invention is fire resistant according to STD 104-0001/ISO3795, UV resistant according to STD 423-0061, scratch resistant according to STD 423-0030, heat resistant according to Volvo STD 423-0055, impact resistant according to EN 13087 and tested VOC free according to Volvo STD 429-0003. The density of the moulding compound according to the present invention was measured 1,34 g/cm³ according to ISO11183, the glass transition temperature Tg was measured 145 °C according to ISO 11358 and the Charpy impact strength was measured to be 8,6 kJ/m² according to ISO 179. Life cycle analysis calculations performed on the moulding compound according to the resent invention resulted in 0,65 kgCO₂ - eq.

Examples of 3D articles made of the moulding compounds of the present invention are sport appliances, such as helmets and skateboards, furniture items, such as chairs and tables, and vehicle parts, such as dashboards, door handles and interior parts. Further, moulding compounds may be used in architecture and building, consumer electronics, major appliance, and the like.

The moulding compounds of the present invention may thus replace currently available moulding compounds comprising more expensive and less environmentally friendly materials, such as plastic and GFRP, without compromising, and in comparison with plastics and woods even improving, the tensile and flexural strength.

The moulding compounds of the present invention have high moisture resistance, which is highly beneficial when the moulding compounds are intended for outdoor use, or for use in a moist environment, such as a bathroom or in a humid climate. Further, the finishing of the surface of moulding compounds of the present invention is highly decorative and aesthetically appealing and may further be adjusted to the desired application. In particular, the surface of the moulding compounds may be shiny or dull. The cellulosic fibre substrates may have a gloss - satin finish, a matte finish, a rough surface, a patterned surface or have a surface with text or pictures on. The moulding compound and 3D articles manufactured therefrom according to the present invention may have various thicknesses over the entire detail or the same thickness over the entire detail.

The 3D articles manufactured from the fibre substrate according to the present invention may have a thickness of at least 1.5 mm, preferably at least 2.5 mm, preferably at least 5 mm, more preferably at least 10 mm. As mentioned above, the thickness of the 3D article may be non-uniform. As is evident from above, the moulding compound of the present invention exhibits an unprecedented strength despite the relatively low thickness. The moulding compound thus combines low weight and slim structure with a profound impact strength. The moulding compound 3D articles manufactured therefrom according to the present invention may also have a significantly greater thickness, such as a thickness of at least 20 mm, preferably at least 40 mm, more preferably at least 50 mm. Further, the total surface area of the moulding compound may be at least 0.1 m². In particular, the total surface area of the moulding compound may be from 0.3 m² to 100 m². In other words, the moulding compound may be rather large and still exhibit unprecedented strength, which enables using such articles for impact-absorbing applications.

The moulding compound according to the present invention may comprise at least one surface layer. By the term "surface layer" is in the context of the present invention is understood a layer being arranged on the surface of the moulding compound. Such a surface layer may be arranged in order to provide scratch resistance, UV resistance, food compatibility, aesthetic appearance, anti-bacterial property, colour, surface structure, friction or any other functionality that may be desired.

The present invention thus relates to a 3D article comprising the moulding compound as described above, wherein the 3D article has a longitudinal extension and a thickness in a direction perpendicular to the longitudinal extension of the 3D article, wherein the thickness is non-uniform.

By the term "non-uniform" is in the context of the present invention understood as being marked by varied or changing appearance. In other words, the 3D article according to the present invention comprises at least a first portion having a first thickness, and a second portion having a second thickness, wherein the first thickness is different from the second thickness. As mentioned above, such a variation in thickness may be desirable when the 3D article is subjected to uneven loads or impacts.

The 3D article according to the present invention may comprise at least one top surface and at least one bottom surface, and wherein the at least one top surface and/or the at least one bottom has at least one developable and/or non-developable surface portion.

In one embodiment, a load bearing 3D article is provided, wherein the load bearing article has a tensile strength least of at least 40 MPa, preferably at least 50 MPa, more preferably at least 100 MPa.

In one embodiment, a load bearing 3D article is provided, wherein the load bearing article has a thickness of at least 0.1 mm, preferably at least 2.5 mm, preferably at least 5 mm, more preferably at least 10 mm.

The 3D article of the present invention may have at least one portion comprising a radius of curvature being below 10 cm, preferably below 5 cm.

The 3D article according to the present invention may comprise one layer of a moulding compound. Alternatively, the 3D article may comprise a plurality of layers. Each layer may be constituted by the moulding compound arranged on a sheet comprising cellulosic fibres as will be described below.

The layers may be oriented such that the grain directions in the layers are substantially parallel. Alternatively, the layers may be oriented such that the angle of the grain directions in the layers range from 0-90° with respect to the neighbouring layers.

The present invention further relates to a method for manufacturing a moulding compound, the method comprising the steps of:
a) providing a starting material comprising cellulosic fibres having a maximum length of 10 mm impregnated with a binding agent selected form the group consisting of: cellulose, hemicellulose, furan and derivatives thereof, lignin and combinations thereof;
b) adding the starting material to a mixture comprising a first solvent and a second solvent thus obtaining a slurry;
c) mixing the slurry thus obtaining a moulding compound.

The binding agent may be polyfurfuryl alcohol (PFA). In such an embodiment, the mixture further comprises an acidic curing catalyst present in an amount from 0.1 to 10 wt%, preferably from 0.1 to 5 wt%. The acidic curing catalyst may be an organic or an inorganic acid.

As mentioned above, the plasticizer may be added during step b). The plasticizer may be cashew nutshell liquid (CNSL).

According to the present invention, the first solvent may be water. Further, the second solvent may be a polar protic solvent, such as ethanol, methanol or a mixture thereof.

The method according to the present invention may further comprise the steps of:
d) preforming the moulding compound into a desired shape thus obtaining a blank;
e) pressing the blank in a pressing tool at a pressure of at least 7 kg/cm², preferably at least 25 kg/cm², more preferably at least 30 kg/cm² and the temperature of at least 60°C, preferably at least 140°C, more preferably at least 150°C during a time period of at least 10 seconds, preferably at least one minute, more preferably at least two minutes.

Thus, the moulding compound may be arranged into a desired shape, and cured by performing step e). Step d) may be performed by extrusion, wherein the shape of the blank obtained in step d) corresponds to the shape of the nozzle orifice. Alternatively, the preforming may be conducted by placing the moulding compound into a standard or customized mould.

The starting material mentioned in step a) may be provided by the steps of:
a') providing the cellulosic fibres having a maximum length of 10 mm;
b') impregnating the cellulosic fibres with a binding agent selected from a group consisting of cellulose, hemicellulose, furan and derivatives thereof, lignin and combinations thereof.

Steps a') and b') may occur before step b). In other words, the cellulosic fibres may be impregnated with the binding agent before the starting material is added to a mixture of the first solvent and the second solvent.

Alternatively, step b') may occur simultaneously with step b). According to such an embodiment, the cellulosic fibres are added to a mixture comprising the binding agent, the first solvent and the second solvent.

According to another embodiment of the present invention, the starting material is provided by the step of:
a") providing the starting material by shredding a prepreg comprising the cellulosic fibres impregnated with the binding agent,
   wherein the step a") occurs before step a).

The prepreg may be cured or uncured, and may be manufactured according to the method described in WO2023/280918.

The particle size of the starting material obtained in step a") may be in the range from 0.5 to 20 mm, preferably from 1 to 10 mm, preferably from 1 to 6 mm.

The method according to the present invention may further comprise a step of:
f) arranging the blank on a sheet comprising cellulosic fibres having a maximum length of 10 mm;
   wherein the step f) occurs after step d).

In other words, the preformed blank may be added to the portions of the sheet wherein additional thickness is required. The cellulosic fibres of the sheet may be impregnated with the binding agent according to the above, which may be same as or different from the binding agent in step a) or b').

Alternatively, the cellulosic fibres of the sheet on which the blank is arranged may be non-impregnated. In such an embodiment, the sheet and the blank may be impregnated with the binding agent after step f). It is understood that in the embodiment wherein step a") is present, the cellulosic fibres of the blank will be subjected to impregnation twice. It is further conceivable that the binding agent present in step a") and the binding agent used after step f) are different binding agents.

Further features of, and advantages with, the present invention will become apparent when studying the appended claims and the following description. The skilled person realizes that different features of the present invention may be combined to create embodiments other than those described in the following, without departing from the scope of the present invention.

### BRIEF DESCRIPTION OF THE DRAWINGS

These and other aspects of the present invention will now be described in more detail, with reference to the appended drawings showing embodiments of the invention, of which:
Figs. 1a-1c depict examples of surfaces of moulding compounds according to the present invention;
Figs. 2a and 2b illustrate a 3D article according to the present invention;
Fig. 3 illustrates yet another embodiment of a 3D article according to the present invention;
Fig. 4 shows the method steps for manufacturing the moulding compound and the 3D article.
Fig. 5 depicts different moulding compounds.

### DETAILED DESCRIPTION OF THE PRESENT INVENTION

The present invention will now be described hereinafter with reference to the accompanying drawings, in which exemplifying embodiments of the present invention are shown. The present invention may, however, be embodied in many different forms and should not be construed as limited to the embodiments of the present invention set forth herein; rather, these embodiments of the present invention are provided by way of example so that this disclosure will convey the scope of the invention to those skilled in the art. In the drawings, identical reference numerals denote the same or similar components having a same or similar function, unless specifically stated otherwise.

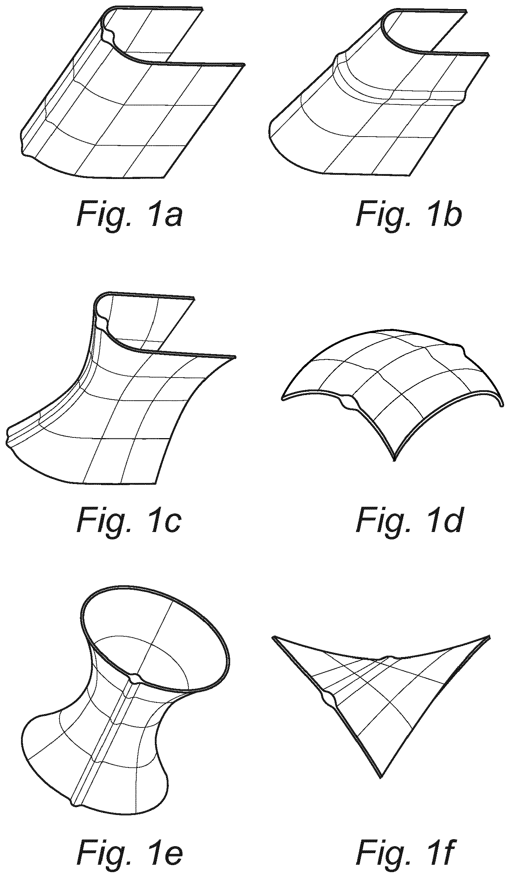

As mentioned above, the moulding compound according to the present invention may be used for manufacturing a 3D article comprising a surface, wherein the surface has at least one developable and/or non-developable surface portion. Figs. 1a-1c illustrate various examples of such surfaces. In particular, Fig. 1a shows developable, or single-curved surfaces, while Figs. 1b and 1c depict non-developable, or double-curved, surfaces.

In the context of the present invention, a developable surface is a smooth surface with zero Gaussian curvature. A Gaussian curvature is defined as a product of two principal curvatures of a surface. Put differently, a developable surface is a non-flat surface that can be flattened onto a plane without distortion, i.e. it can be bent without stretching or compression. Conversely, it is a surface which can be made by transforming a plane by means of folding, bending, rolling, cutting and/or gluing. Examples of a developable surface are cylinders and cones.

On the contrary, a non-developable surface is a surface with non-zero Gaussian curvature. A non-developable surface is thus a non-flat surface that cannot be flattened onto a plane without distortion. Most of surfaces in general are non-developable surfaces. Non-developable surfaces may be referred to as doubly curved surfaces. One of the most often-used non-developable surfaces is a sphere.

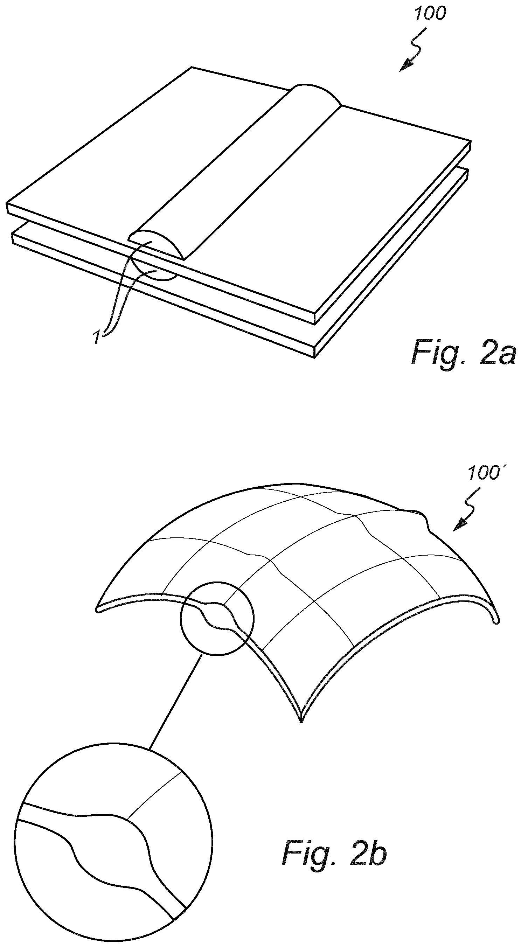

Fig. 2a illustrates a 3D article 100 comprising the moulding compound 1 as described above and arranged between the sheets 2. The sheets 2 comprise cellulosic fibres having length of maximum 10 mm. When the 3D article 100 is cured, the moulding compound 1 and the sheets 2 are joined in such a manner that a thickened portion 3 is formed in the cured 3D article 100', as shown in Fig. 2b. It should be noted that due to unique properties of the moulding compound 1, the cured 3D article 100' is completely homogeneous.

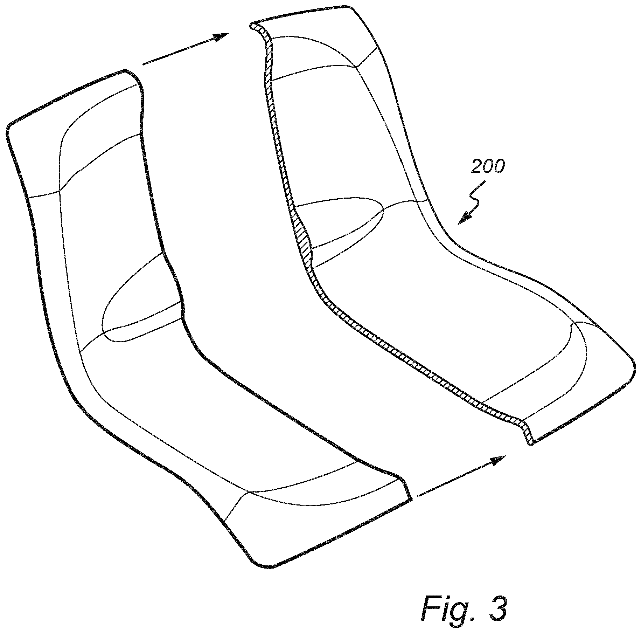

Fig. 3 illustrates a 3D article 200 according to the present invention, wherein the moulding compound is added forming a thickened portion 201 of the chair seat. As may be seen in Fig. 3, the chair seat comprises four portions C-F, which will be described in greater detail below.

Portion C comprises a complex non-developable 3D surface comprising the edge with arc and transition from double curved surface to single curved surface. Portion D comprises a non-developable complex 3D surface comprising the edge with arc and transition from extreme double curved surface to extreme single curved surface. Turning the attention to point E, a complex 3D edge is illustrated comprising a larger radius with double curved, i.e. non developable surface. Portion F comprises a complex 3D edge, wherein a sharp edge radius (r < 2mm) is maintained along all transitions between single and double curved surfaces. As may be seen in Fig. 3, the 3D article 200 has non-uniform thickness.

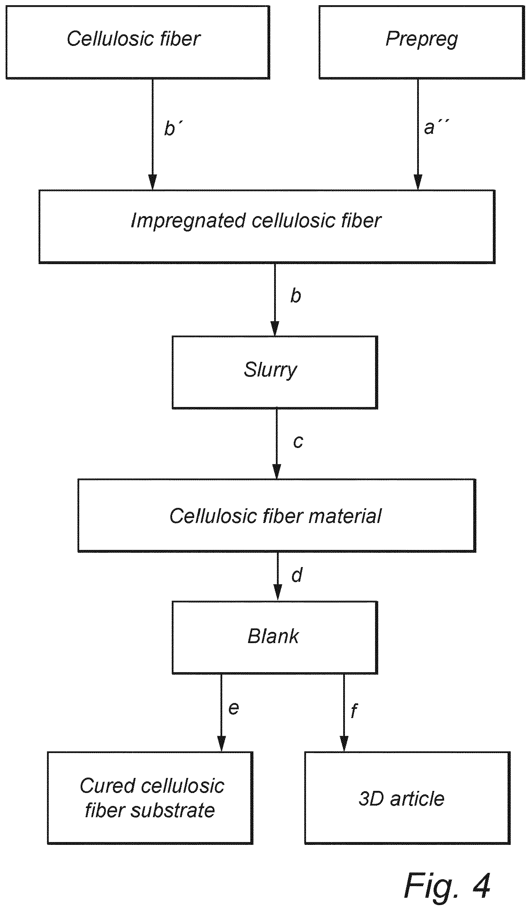

Fig. 4 shows different steps of the method for manufacturing the cellulosic fibre substrate according to the present invention. As may be seen, either virgin or recycled non-impregnated cellulosic fibres may be used as a starting material. These fibres are impregnated with a binding agent according to step b', thus providing impregnated cellulosic fibres.

Alternatively, a prepreg comprising cellulosic fibres and a binding agent may be used as a starting material. The prepreg may be cured or uncured. Such a prepreg is shredded according to step a", thus resulting in impregnated cellulosic fibres.

It should be noted that the impregnated cellulosic fibres may be a mixture of virgin or recycled cellulosic fibres impregnated with a binding agent, and impregnated cellulosic fibres originating from a prepreg.

The impregnated cellulosic fibres are added to the first solvent, the second solvent, and optionally the plasticizer and a catalyst according to step b), this obtaining a slurry, which is subjected to mixing according to step c) resulting in the moulding compound according to the present invention.

The moulding compound may be preformed in a blank (step d). The shape of the blank depends on the intended application of the moulding compound. For instance, the blank 1 in Fig. 2 is in the form of a hemisphere.

The blank may either be cured directly (step e), thus providing a cured moulding compound, or may be applied into a sheet of cellulosic fibres (step f), and subsequently cured, as shown in Figs. 2a and 2b.

As mentioned above, the present invention provides a moulding compound comprising 60 to 90 wt% of cellulosic fibres having a length of maximum 10mm, 0 to 10% of an acidic curing catalyst and 10 to 40 wt% of a binding agent selected form the group consisting of: cellulose, hemicellulose, furan and derivatives thereof, lignin and combinations thereof. Further, the moulding compound according to the present invention may further comprise a plasticizer.

Different mixtures comprising PFA as a binding agent, a catalyst, a first solvent being water, a second solvent being ethanol and CSNL as plasticizer have been prepared as shown in Table 1.

**Table 1.**

| Mixture | PFA (gr) | Catalyst (gr) | Water (gr) | Ethanol (%) | CSNL (%) |
|---|---|---|---|---|---|
| Ref | 200 | 10 | 13 | 0 | 0 |
| 1 | 200 | 10 | 13 | 10 | 10 |
| 2 | 200 | 10 | 13 | 20 | 10 |

These mixtures have been used when manufacturing the moulding compound of the present invention. The results are shown in Table 2.

**Table 2.**

| Sample | Cellulosic fibres (gr) | Mixture | Weight of the mixture (gr) | Total weight (gr) |
|---|---|---|---|---|
| A | 15 | 1 | 30 | 37.6 |
| B | 20 | 2 | 30 | 44.2 |
| C | 10 | 1 | 30 | 35 |
| D | 15 | 2 | 30 | 40.4 |
| E | 10 | Ref | 30 | 28 |

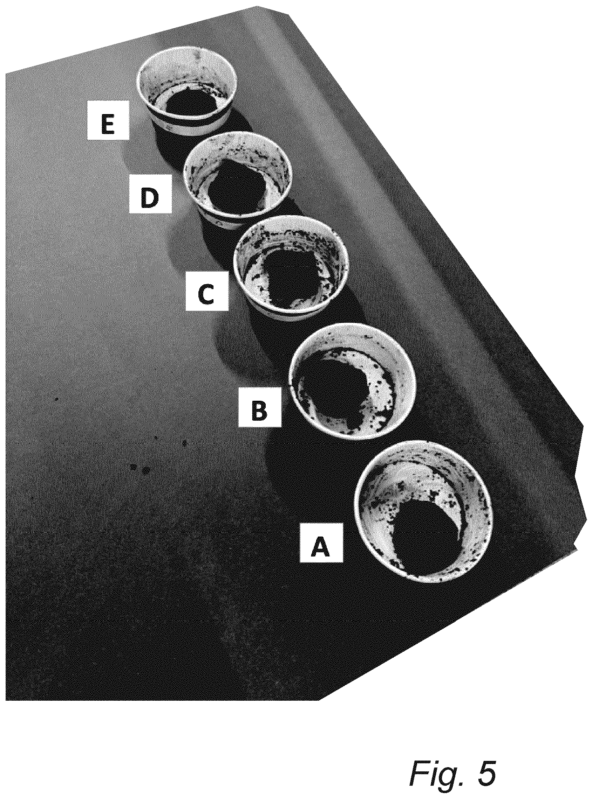

The moulding compounds are depicted in Fig. 5. As may be seen, the best result was achieved in sample D.

To summarize, the present invention provides moulding compounds comprising cellulosic fibres, which is a natural, readily available, highly recyclable, and thus environmentally friendly and cost-efficient material. The surprising and unexpected effect of the present invention is that the mechanical properties, e.g. flexural and tensile strength of the moulding compound of the present invention is comparable to the tensile and/or flexural strength of the 3D articles manufactured from GFRP, yet being made of short cellulosic fibres in combination with a bio-based binder, which provides the freedom of design to create complex 3D surfaces especially comprising non-developable portions. Another advantage of the present invention is that by-products from food and agriculture industry are used as a binding agent, which contributes to circular economy and is environmentally benign.

The moulding compound according to the present invention is environmentally friendly, allows for manufacturing of complex articles having intricate 3D structure, exhibits an extremely high strength. Further, the method for manufacturing the moulding compound according to the present invention is fast and cost efficient, since it involves fewer steps compared to methods of the prior art.

While the present invention has been illustrated in the appended drawings and the foregoing description, such illustration is to be considered illustrative or exemplifying and not restrictive; the present invention is not limited to the disclosed embodiments. Other variations to the disclosed embodiments can be understood and effected by those skilled in the art in practicing the claimed invention, from a study of the drawings, the disclosure, and the appended claims. In the appended claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A moulding compound, comprising:
60 to 90 wt% of cellulosic fibres having a length of maximum 10mm,
0 to 10% of an acidic curing catalyst and
10 to 40 wt% of a binding agent selected form the group consisting of: cellulose, hemicellulose, furan and derivatives thereof, lignin and combinations thereof.

2. The moulding compound according to claim 1,
wherein said moulding compound comprises a plasticizer.

3. The moulding compound according to claim 1 or 2, wherein said binding agent is polyfurfuryl alcohol (PFA).

4. The moulding compound according to any one of claims 2 or 3, wherein said plasticizer is a cashew nutshell liquid (CNSL).

5. The moulding compound according to any one of the preceding claims, wherein said cellulosic fibres comprise from 0-100% virgin cellulosic fibres and 0-100% recycled cellulosic fibres.

6. A 3D article comprising the moulding compound according to any one of claims 1-5, wherein said 3D article has a longitudinal extension and a thickness in a direction perpendicular to said longitudinal extension of said 3D article, wherein said thickness is non-uniform.

7. The 3D article according to claim 6, wherein said 3D article comprises at least one top surface and at least one bottom surface, and wherein said at least one top surface and/or said at least one bottom has at least one developable and/or non-developable surface portion.

8. A method for manufacturing a moulding compound, the method comprising the steps of:
a) providing a starting material comprising cellulosic fibres having a maximum length of 10 mm impregnated with a binding agent selected form the group consisting of: cellulose, hemicellulose, furan and derivatives thereof, lignin and combinations thereof;
b) adding said starting material to a mixture comprising a first solvent and a second solvent thus obtaining a slurry;
c) mixing said slurry thus obtaining a moulding compound.

9. The method according to claim 8, said method further comprising the steps of:
d) preforming said moulding compound into a desired shape thus obtaining a blank;
e) pressing said blank in a pressing tool at a pressure of at least 7 kg/cm², preferably at least 25 kg/cm², more preferably at least 30 kg/cm² and the temperature of at least 60°C, preferably at least 140°C, more preferably at least 150°C during a time period of at least 10 seconds, preferably at least one minute, more preferably at least two minutes.

10. The method according to claim 8 or 9, wherein said starting material is provided by the steps of:
a') providing said cellulosic fibres having a maximum length of 10 mm;
b') impregnating said cellulosic fibres with a binding agent selected from a group consisting of cellulose, hemicellulose, furan and derivatives thereof, lignin and combinations thereof.

11. The method according to claim 10, wherein said step b') occurs simultaneously with step b).

12. The method according to claim 8 or 9, wherein said starting material is provided by the step of:
a") providing said starting material by shredding a prepreg comprising said cellulosic fibres impregnated with said binding agent,
wherein said step a") occurs before step a).

13. The method according to claim 12, wherein a particle size of said starting material obtained in step a") is in the range from 0.5 mm to 20 mm, preferably from 1 to 6 mm.

14. The method according to any one of claims 8-13, wherein said binding agent is polyfurfuryl alcohol (PFA).

15. The method according to any one of claims 8-14, wherein a plasticizer is added during step b).

16. The method according to any one of claims 8-15, wherein said first solvent is water.

17. The method according to any one of claims 8-16, wherein said second solvent is a polar protic solvent.

18. The method according to any one of claims 9-17, wherein said method further comprises a step of:
f) arranging said blank on a sheet comprising cellulosic fibres having a maximum length of 10 mm;
wherein said step f) occurs after step d).
